# EUROPÄISCHE PATENTANMELDUNG

(11) **EP 4 760 154 A1**
(43) Veröffentlichungstag der Anmeldung: **17.06.2026**
(21) Anmeldenummer: 24218631.0
(22) Anmeldetag: 10.12.2024
(51) Int. Cl.: F24D 3/10, F16L 59/02, F16L 59/16, F24D 19/00

(54) **ISOLATIONSSYSTEM**

(71) Anmelder: Watts Industries Deutschland GmbH, 76829 Landau (DE)
(72) Erfinder: GAUB, Markus, 67480 Edenkoben (DE); ENGMANN, Ulrich, 76829 Landau (DE); CATTARIUS, Marco, 76857 Albersweiler (DE)
(74) Vertreter: Patentanwälte Dr. Keller, Schwertfeger Partnerschaft mbB

(57) **Zusammenfassung**

Die vorliegende Erfindung betrifft ein Isolationssystem geeignet zur thermischen Isolierung von Bauteilen einer hydraulische Regelgruppe (10), umfassend eine erste Dämmvorrichtung (32) und eine zweite Dämmvorrichtung (34), wobei die erste Dämmvorrichtung (32) wenigstens ein Dämmungsmodul (40, 42, 44, 46) aufweist, das im Inneren einen Hohlraum besitzt und aus wenigstens zwei Schalenteilen (41a, 41b, 43a, 43b, 45a, 45b, 47a, 47b) zusammengesetzt ist, wobei die zweite Dämmvorrichtung (34) die erste Dämmvorrichtung (32) zumindest abschnittsweise umgibt und wobei die erste Dämmvorrichtung (32) aus einem diffusionsdichten Material hergestellt ist.

## Beschreibung

Die vorliegende Erfindung betrifft ein Isolationssystem geeignet zur thermischen Isolierung von Bauteilen einer hydraulischen Regelgruppe sowie eine hydraulische Regelgruppe mit einem solchen Isolationssystem.

Hydraulische Regelgruppen werden in Vorrichtungen zum Heizen und/oder Kühlen eingesetzt. Beispielsweise befinden sich hydraulische Regelgruppen in Fußbodenheizungen und in Klimaanlagen. Die Hydraulikgruppe selbst umfasst üblicherweise eine Steuer- oder Regeleinheit und/oder eine Pumpeneinheit, die an einem Rohrleitungsabschnitt befestigt sind, sowie entsprechende Rohrleitungsabschnitte. In der Regel sind zwei Rohrleitungsabschnitte vorgesehen. Der eine Rohrleitungsabschnitt ist Teil eines Vorlaufs und der andere Rohrleitungsabschnitt ist Teil des Rücklaufs. Die Steuer- oder Regeleinheit und/oder Pumpeneinheit können sowohl am Rohrleitungsabschnitt des Vorlaufs als auch am Rohrleitungsabschnitts des Rücklaufs vorgesehen sein.

Je nach Einsatzgebiet der hydraulischen Regelgruppe bestehen unterschiedliche Herausforderungen. Wird die hydraulische Regelgruppe in Heizvorrichtungen eingesetzt, so besteht die Notwendigkeit, den Vor- und Rücklauf der hydraulischen Regelgruppe gegen Wärmeverlust zu isolieren, wobei darauf geachtet werden muss, dass die in der Steuer- oder Regeleinheit und/oder Pumpeneinheit enthaltenen Elektronikbauteile nicht überhitzen. Für diese Anwendung wurden bereits Wärmedämmvorrichtungen entwickelt. Eine solche Dämmvorrichtung ist in der EP 2 498 007 A1 beschrieben.

Wurden die hydraulischen Regelgruppen bisher vor allem in mit Gas oder Heizöl betriebenen reinen Heizvorrichtungen oder Heizanlagen eingesetzt, insbesondere in Fußbodenheizungen verwendet, so finden die hydraulischen Regelgruppen vermehrt Einsatz in Heiz- und/oder Kühlanlagen mit Wärmepumpen. Eine Wärmepumpe hat den Vorteil, dass sie sowohl in ihrer Funktion als Klimaanlage zum Kühlen als auch in ihrer Funktion als Heizung zum Wärmen verwendet werden kann. Eine mit einer Wärmepumpe versehene Anlage kann somit als Kühlanlage als auch als Heizanlage verwendet werden. Dies führt dazu, dass die hydraulische Regelgruppe sowohl für Heizanwendungen als auch für Kühlanwendungen geeignet sein muss.

Bei den bisher bekannten hydraulischen Regelgruppen, die zusammen mit einer Wärmepumpe in einer Heiz- und Kühlanlage eingesetzt wurden, wurde jedoch festgestellt, dass sich im Kühlbetrieb Kondenswasser an der hydraulischen Regelgruppe bildet, welches wenn die kondensierte Wassermenge zu groß wird, abtropft. Insbesondere kann sich in den kombinierten Kühl- und Heizanlagen unterhalb der hydraulischen Regelgruppe Wasser sammeln. Dies kann zu unschönen Wasserflecken führen. Da sich auf dem Boden sammelnde Flüssigkeit, insbesondere Wasser, oder an Rohrleitungen herablaufende Flüssigkeit, auch ein Indiz für eine Undichtigkeit der Kühl- und Heizanlage sein kann, ist es schwierig, die Ursache von herabtropfendem Wasser aus der hydraulischen Regelgruppe zu bestimmen, wenn Kondenswasser vorhanden ist. Während eine Kondensatbildung zwar unschön und gegebenenfalls einen negativen Einfluss auf die Umgebung haben kann, so stellt eine Undichtigkeit in einer Kühl- und Heizanlage ein deutliches gravierenderes Problem dar. Werden Wartungs- und/oder Reparaturmaßnahmen an der Kühl- und Heizanlage nur aufgrund von herabtropfendem Kondenswasser eingeleitet, entstehen unnötige Kosten und vermeidbarer Arbeitsaufwand.

Es ist daher Aufgabe der vorliegenden Erfindung, eine hydraulische Regelgruppe bereitzustellen, bei der kein störendes Kondenswasser auftritt. Insbesondere ist es Aufgabe der vorliegenden Erfindung, ein Isolationssystem geeignet zur thermischen Isolierung von Bauteilen einer hydraulischen Regelgruppe bereitzustellen, welches den Betrieb einer hydraulischen Regelgruppe sowohl im Kühlbetrieb als auch im Heizbetrieb ermöglicht, wobei im Kühlbetrieb kein Kondenswasser aus der Regelgruppe herabtropft oder an den Rohrleitungen entlangläuft.

Erfindungsgemäß wird die Aufgabe gelöst durch ein Isolationssystem, geeignet zur thermischen Isolierung von Bauteilen einer hydraulischen Regelgruppe nach Anspruch 1. Insbesondere umfasst das Isolationssystem, welches zur thermischen Isolierung von Bauteilen einer hydraulischen Regelgruppe geeignet ist, eine erste Dämmvorrichtung und eine zweite Dämmvorrichtung, wobei die erste Dämmvorrichtung wenigstens ein Dämmungsmodul aufweist, im Inneren einen Hohlraum besitzt und aus wenigstens zwei Schalenteilen zusammengesetzt ist, wobei die zweite Dämmvorrichtung die erste Dämmvorrichtung zumindest abschnittsweise umgibt und wobei die erste Dämmvorrichtung aus einem diffusionsdichten Material hergestellt ist.

Unter einem diffusionsdichten Material wird im Rahmen der Erfindung ein Material verstanden, das verhindert, dass Feuchtigkeit oder Wasserdampf, welche/welcher außen an das Schalenteil gelangt, durch das Schalenteil hindurch auf die Innenseite des Schalenteils gelangt und dort kondensiert. Das diffusionsdichte Material kann in dem Sinne dicht sein, dass überhaupt keine Feuchtigkeit oder Wasserdampf durch das Schalenteil hindurch gelangt oder dass die Menge der durch das Material hindurchdringenden Feuchtigkeit oder der Wasserdampf so gering ist, dass keine bzw. keine nennenswerte Kondensatbildung auftritt.

Wenn das erste Dämmungsmodul auch mehrere Schalenteile aufweisen kann, so ist es bevorzugt, dass genau zwei Schalenteile vorgesehen sind, die den Hohlraum ausbilden, wobei die zwei Schalenteile insbesondere als Halbschalen ausgebildet sind. Hierbei ist es von besonderem Vorteil, dass die zwei Schalenteile bis auf nicht beeinflussbare Vorgaben durch die einzelnen Bauteile der zu isolierenden hydraulischen Regelgruppe spiegelsymmetrisch ausgebildet sind.

Sowohl die erste Dämmvorrichtung als auch die zweite Dämmvorrichtung dienen der thermischen Isolation.

Es wurde festgestellt, dass mittels der ersten Dämmvorrichtung die Kondensatbildung im Falle eines Kühlbetriebs deutlich reduziert, wenn nicht sogar verhindert werden kann und dabei die notwendige thermische Isolierung im Falle des Heizbetriebs erhalten bleibt. Die zweite Dämmvorrichtung sorgt dafür, dass insbesondere im Falle des Heizbetriebs die Wärmedämmung weiter optimiert wird, wobei die zweite Dämmvorrichtung darüber hinaus auch die hydraulischen Regelgruppe selbst vor mechanischen Einflüssen schützen kann.

Während die erste Dämmvorrichtung eine thermische und diffusionsdichte Isolierung bereitstellt, ist es somit ausreichend, dass die zweite Dämmvorrichtung nur eine thermische Isolierung bewirkt.

Der zweiteilige Aufbau der thermischen Isolierung hat den Vorteil, dass beispielsweise die erste Dämmvorrichtung bereits werksseitig an einer hydraulischen Regelgruppe montiert werden kann, so dass eine Montage und Isolierung der hydraulischen Regelgruppe beim Kunden einfach und rasch durchführbar sind.

Die zweite Dämmvorrichtung kann aus dem gleichen Material wie die erste Dämmvorrichtung hergestellt sein. Beispielsweise können sowohl die erste Dämmvorrichtung, insbesondere das Dämmungsmodul, als auch die zweite Dämmvorrichtung aus einem vernetzen Polyethylen-Schaum hergestellt sein.

Aus Gründen der Flexibilität ist es jedoch von Vorteil, dass die zweite Dämmvorrichtung aus einem anderen Material hergestellt ist als das Dämmungsmodul der ersten Dämmvorrichtung. Insbesondere kann die zweite Dämmvorrichtung aus einem Material hergestellt sein, welches einen geringeren Wasserdampf-Diffusionswiderstand aufweist als das Material des Dämmungsmoduls der ersten Dämmvorrichtung. Beispielsweise kann das Dämmungsmodul der ersten Dämmvorrichtung aus einem vernetzen Polyethylen-Schaum und die zweite Dämmvorrichtung aus einem geschäumten Polystyrol oder einem geschäumten Polypropylen hergestellt sein.

Das Vorsehen der ersten Dämmvorrichtung in Form eines Dämmungsmoduls, welches aus wenigstens zwei Schalenteilen zusammengesetzt ist, ermöglicht eine einfache Montage des Isolationssystems sowie eine kompakte Ausbildung der ersten Dämmvorrichtung an den zu isolierenden Bauteilen. Die kompakte Ausbildung der ersten Dämmvorrichtung hat den Vorteil, dass die zweite Dämmvorrichtung, die die erste Dämmvorrichtung zumindest abschnittsweise umgibt, ebenfalls vergleichsweise kompakt ausgebildet werden kann.

Für eine einfache Montage der ersten Dämmvorrichtung an einem Bauteil ist es von Vorteil, dass die wenigstens zwei Schalenteilen mittels einer ersten Verbindungsart, insbesondere mittels einer Steckverbindung miteinander verbunden werden können.

Hierbei ist es von besonderem Vorteil, dass die erste Verbindungart diffusionsdicht ist. Dies kann beispielsweise dadurch erreicht werden, indem die beiden Schalenteile entlang ihrer Verbindungslinie überlappend ausgebildet sind. Beispielsweise kann die erste Verbindungart aus einem ersten Verbindungselement bestehen, welches nutförmig ausgebildet ist, wobei das erste nutförmige Verbindungselement in ein komplementär ausgebildetes nutförmiges zweites Verbindungselement des anderen Schalenteils eingreift. Alternativ kann ein erstes Verbindungselement als ein Vorsprung ausgebildet sein, der mit einer Hinterschneidung des zweiten Verbindungselements wechselwirkt. Entscheidend ist hierbei, dass zwischen den miteinander verbundenen Schalenteilen kein durchgehender Spalt oder Öffnung entsteht, durch den oder die Wasserdampf von der Außenseite der ersten Dämmvorrichtung in den Hohlraum im Inneren der ersten Dämmvorrichtung eindringt. Es versteht sich, dass das erste und/oder zweite Verbindungselement entsprechende Verriegelungen, beispielsweise Verrastungen oder Stecksysteme aufweisen können, damit die verbundenen Schaltenteile sicher zusammengehalten werden.

Bei einer bevorzugten Ausführungsform sind die Innenkontur des Dämmungsmoduls und die Außenkontur des Dämmungsmodul ähnlich. Dies führt dazu, dass das Dämmungsmodul im Wesentlichen eine konstante Dicke aufweist und somit vergleichbare Diffusionseigenschaften an allen Stellen des Dämmungsmoduls hat. Darüber hinaus kann dadurch das Dämmungsmodul zum einem sehr materialsparend produziert werden und zum anderen ist der Raumbedarf des Dämmungsmoduls vergleichsweise gering.

Es ist weiter von Vorteil, dass ein erstes Dämmungsmodul und ein zweites Dämmungsmodul vorgesehen sind, wobei das erste Dämmungsmodul und das zweite Dämmungsmodul diffusionsdicht miteinander verbunden sind. Dies bietet eine gewisse Flexibilität, wenn unterschiedlich arrangierte oder unterschiedlich große hydraulische Regelgruppen diffusionsdicht isoliert werden sollen.

Wenn das erste Dämmungsmodul und das zweite Dämmungsmodul auch identisch aufgebaut sein können, um beispielsweise ein Rohrleitungsstück mit mehreren hintereinander angeordneten Dämmungselementen zu isolieren, ist bei einer bevorzugten Ausführungsform jedoch vorgesehen, dass das erste Dämmungsmodul und das zweite Dämmungsmodul unterschiedliche Formen aufweisen. Aufgrund des Vorsehens einer begrenzten Anzahl unterschiedlicher Module lassen sich eine Vielzahl verschiedener Isolationssysteme für unterschiedliche Anwendungszwecke bilden. Beispielsweise kann eine erste Art von Dämmungsmodulen vorgesehen sein, welche ausschließlich für Rohrleitungen ausgelegt ist, während eine zweite Art von Dämmungsmodulen vorgesehen ist, welche an die Kontur einer Pumpe und/oder eines Mischventils einer hydraulischen Regelgruppe angepasst ist. Hierdurch besteht die Möglichkeit, dass in hydraulischen Regelgruppen, in denen verschiedene Bauteile unterschiedlich angeordnet sind, die einzelnen hydraulischen Regelgruppen mit wenigen verschiedenen Elementen vollständig diffusionsdicht isoliert werden können.

Um das erste Dämmungsmodul und das zweite Dämmungsmodul miteinander verbinden zu können, ist es von Vorteil, dass das erste Dämmungsmodul ein Verbindungselement erster Art und das zweite Dämmungsmodul ein Verbindungselement zweiter Art aufweist, wobei das erste Dämmungsmodul und das zweite Dämmungsmodul mittels des Verbindungselements erster Art und des Verbindungselements zweiter Art miteinander verbindbar sind und eine zweite Verbindungart ausbilden.

Bei dieser Ausführungsform lassen sich Dämmungsmodule einfach untereinander verbinden. Beispielsweise können dadurch Dämmungsmodule, die für einen Rohrleitungsabschnitt ausgebildet sind, miteinander verbunden werden, um einen längeren Rohrleitungsabschnitt zu isolieren. Für eine einfache Verbindung des ersten Dämmungsmoduls mit dem zweitem Dämmungsmodul ist es von Vorteil, dass das Verbindungselement erster Art und das Verbindungselement zweiter Art im verbundenen Zustand eine Steckverbindung ausbilden. Beispielsweise können das Verbindungselement erster Art und das Verbindungselement zweiter Art im Sinne einer Nut und Feder ausgebildet sein. Alternativ können das Verbindungselement erster Art und das Verbindungselement zweiter Art in Form eines entlang der Verbindungsrichtung erstreckenden Ansatzes ausgebildet sein, wobei der Außendurchmesser des Verbindungselements erster Art gleich oder kleiner dem Innendurchmesser des Verbindungselements zweiter Art ist.

Um das Dämmungsmodul fest an einem zu isolierenden Bauteil zu halten, umfasst die erste Dämmvorrichtung vorzugsweise Spannvorrichtungen, die beispielsweise in Form von Spannringen vorgesehen sein können. Die Spannvorrichtung beispielweise in Form eines Spannrings hat zudem den Vorteil, dass ein gegebenenfalls noch vorhandener Abstand zwischen den wenigstens zwei miteinander verbundenen Schalenteilen weiter reduziert wird, so dass kein Wasserdampf entlang der Verbindungslinie zwischen den wenigstens zwei Schalenteilen in den Hohlraum des Dämmungsmoduls gelangt.

Bei einer bevorzugten Ausführungsform ist in einem Zustand, in dem das erste Dämmungsmodul und das zweite Dämmungsmodul miteinander verbunden sind, zwischen dem ersten Dämmungsmodul und dem zweiten Dämmungsmodul ein Kontaktbereich ausgebildet, wobei im Kontaktbereich an der Außenseite des ersten Dämmungsmoduls oder an der Außenseite des zweiten Dämmungsmoduls eine mechanische Spannvorrichtung, insbesondere ein Spannring vorgesehen ist. Mittels der im Kontaktbereich vorgesehenen Spannvorrichtung lässt sich zum einen das erste und/oder zweite Dämmungsmodul fest an ein zu isolierendes Bauteil drücken, so dass das erste Dämmungsmodul und das zweite Dämmungsmodul jeweils sicher an dem Bauteil gehalten werden. Zum anderen kann die Spannvorrichtung im Kontaktbereich des ersten Dämmungsmoduls und des zweiten Dämmungsmoduls den Abstand zwischen dem ersten Dämmungsmodul und dem zweiten Dämmungsmodul verringern, so dass ein Eindringen von Wasserdampf in den Hohlraum der ersten Dämmungsvorrichtung durch die Verbindungsstelle zwischen dem ersten Dämmungsmodul und dem zweiten Dämmungsmodul reduziert oder sogar vermieden wird.

Bei einer bevorzugten Ausführungsform ist die zweite Dämmvorrichtung als Gehäuse mit einer Rückwand und einem Deckel ausgebildet, wobei die erste Dämmvorrichtung in dem Gehäuse angeordnet ist. Die zweite Dämmvorrichtung sollte hierbei mit Abstand von der ersten Dämmvorrichtung angeordnet sein, um eine Luftzirkulation zwischen der ersten Dämmvorrichtung und der zweiten Dämmvorrichtung zu ermöglichen. Die Luftzirkulation ist notwendig, um zu verhindern, dass sich Bauteile wie Pumpen oder Steuereinheiten einer hydraulischen Regelgruppe im Heizbetrieb nicht überhitzen. Vorzugsweise ist der Deckel lösbar mit der Rückwand verbunden.

Gegenstand der Erfindung ist auch eine hydraulische Regelgruppe, umfassend wenigstens einen fluidführenden Rohrleitungsabschnitt sowie wenigstens eines der Bauteile Mischventil, Steuer- und/oder Regeleinheit, Pumpeneinheit, wobei wenigstens eines der Bauteile Mischventil, Steuer- und/oder Regeleinheit, Pumpeneinheit an dem fluidführenden Rohrleitungsabschnitt befestigt ist und wobei wenigstens eines der Bauteile Mischventil, Steuer- und/oder Regeleinheit, Pumpeneinheit und/oder der wenigstens eine fluidführende Rohrleitungsabschnitt mit einem Dämmungsmodul nach einem der vorhergehenden Ansprüche umgeben ist.

Insbesondere ist es von Vorteil, dass das Dämmungsmodul wenigstens eines der Bauteile Mischventil, Steuer- und/oder Regeleinheit, Pumpeneinheit und/oder den wenigstens einen fluidführenden Rohrleitungsabschnitt passgenau umgibt. Hierdurch ergibt sich eine optimale diffusionsdichte und thermische Isolierung das Bauteils und/oder des wenigstens einen fluidführenden Rohrleitungsabschnitts.

Eine besonders gute diffusionsdichte und thermische Isolierung der hydraulischen Regelgruppe wird dadurch erreicht, dass jedes der Bauteile der hydraulischen Regelgruppe und der wenigstens eine fluidführende Rohrleitungsabschnitt mit einem Dämmungsmodul umgeben ist, wobei die Dämmungsmodule jeweils diffusionsdicht miteinander verbunden sind.

Bei einer bevorzugten Weiterbildung bildet die zweite Dämmvorrichtung ein Gehäuse, in der die mit der ersten Dämmvorrichtung versehene hydraulische Regelgruppe angeordnet ist.

Beispielsweise wird das Gehäuse der zweiten Dämmvorrichtung durch eine Rückwand und einen Deckel gebildet, wobei der Deckel vorzugsweise lösbar mit der Rückwand verbunden ist. Der Deckel kann kastenförmig ausgebildet sein, so dass zwischen der mit der ersten Dämmvorrichtung versehenen hydraulischen Regelgruppe und dem Deckel Zwischenräume für eine Luftzirkulation entstehen. Um die in der zweiten Dämmvorrichtung entstehende Wärme abtransportieren zu können, ist es von Vorteil, dass in dem Gehäuse, insbesondere in dem Deckel der zweiten Dämmvorrichtung Lüftungen beispielsweise in Form von Lüftungsschlitzen vorgesehen sind.

Vorzugsweise umfasst das Dämmungsmodul genau zwei Schalenteile, wobei die Schnittebene, die das Dämmungsmodul in wenigstens zwei Schalenteile, insbesondere Halbschalenteile teilt, parallel zu den Rohrleitungsabschnitten der hydraulischen Regelgruppe verläuft. Hierdurch ist beispielsweise eine Montage der einzelnen Schalenteile von vorne und von hinten möglich.

Bevorzugte Ausführungsformen werden anhand der beigefügten Zeichnungen näher erläutert, in denen zeigen:
- Fig. 1: eine hydraulische Regelgruppe;
- Fig. 2: ein Isolationssystem in einem an einer hydraulischen Regelgruppe montierten Zustand;
- Fig. 3: die hydraulische Regelgruppe der Fig. 1 mit teilweise montiertem Isolationssystem;
- Fig. 4: die hydraulische Regelgruppe mit Isolationssystem in zerlegter Darstellung;
- Fig. 5: ein Dämmungsmodul erster Art mit getrennten Schalenteilen;
- Fig. 6: ein Dämmungsmodul erster Art mit verbundenen Schalenteilen;
- Fig. 7: einen Querschnitt durch ein Dämmungsmodul erster Art mit verbundenen Schalenteilen;
- Fig. 8: ein Dämmungsmodul zweiter Art mit getrennten Schalenteilen;
- Fig. 9: ein Dämmungsmodul zweiter Art mit verbundenen Schalenteilen;
- Fig. 10: eine erste Ausführungsform eines Dämmungsmoduls dritter Art mit getrennten Schalenteilen;
- Fig. 11: eine zweiter Ausführungsform eines Dämmungsmoduls dritter Art mit verbundenen Schalenteilen;
- Fig. 12: ein Dämmungsmodul vierter Art mit getrennten Schalenteilen;
- Fig. 13: ein Dämmungsmodul vierter Art mit verbundenen Schalenteilen in einer Ansicht von unten;
- Fig 14: das Dämmungsmodul vierter Art mit verbundenen Schalenteilen in einer Ansicht von oben;
- Fig. 15: die hydraulische Regelgruppe mit montierter erster Dämmvorrichtung in einer Ansicht von vorne;
- Fig. 16: einen Längsschnitt durch die in Fig. 15 dargestellte hydraulische Regelgruppe mit montierter erster Dämmvorrichtung;
- Fig. 17: einen Längsschnitt durch zwei miteinander verbundene Dämmungsmodule gemäß einer ersten Ausführungsform;
- Fig. 18: einen Längsschnitt durch zwei miteinander verbundene Dämmungsmodule gemäß einer zweiten Ausführungsform;
- Fig. 19: die in die zweite Dämmvorrichtung aufgenommene gedämmte Hydraulikgruppe;
- Fig. 20: verschiedene Ausführungsformen einer hydraulischen Regelgruppe mit erster Dämmvorrichtung und
- Fig. 21: ein Anwendungsbeispiel im Heiz./Kühlbetrieb.

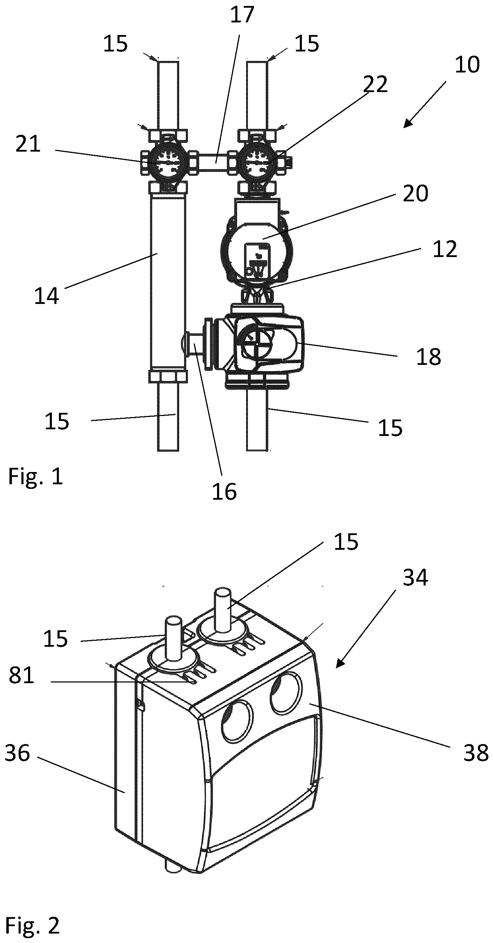

Figur 1 zeigt eine hydraulische Regelgruppe 10, wie sie beispielsweise in Heiz- und/oder Kühlvorrichtungen verwendet wird. Die hydraulische Regelgruppe 10 umfasst einen ersten Rohrleitungsabschnitt 12 und einen zweiten Rohrleitungsabschnitt 14, die parallel zueinander angeordnet sind und zwei Stirnseiten aufweisen. An jeder Stirnseite mündet jeder Rohrleitungsabschnitt 12, 14 jeweils in ein Anschlussrohr 15. Der erste Rohleitungsabschnitt 12 dient als Vorlauf, während der zweite Rohrleitungsabschnitt 14 als Rücklauf verwendet wird. Der erste Rohrleitungsabschnitt 12 und der zweite Rohrleitungsabschnitt 14 sind über ein Bypassrohr 16 sowie über ein Verbindungsrohr 17 miteinander verbunden. Am ersten Rohleitungsabschnitt 12 befinden sich ein Mischventil 18 und eine in Fließrichtung des Vorlaufs oberhalb des Mischventils 18 angeordnete Pumpe 20. Sowohl im ersten Rohrleitungsabschnitt 12 als auch im zweiten Rohrleitungsabschnitt 14 sind Thermometer 21, 22 eingebaut. Das Verbindungsrohr 17 befindet sich im Bereich der Thermometer 21, 22 in Fließrichtung des Vorlaufs hinter der Pumpe, während das Bypassrohr 16 in Höhe des Mischventils 18 vorgesehen ist.

Die beiden Thermometer 21, 22 sowie die Pumpe 20 und das Mischventil 18 sind Bauteile, die an dem ersten Rohrleitungsabschnitt 12 bzw. zweiten Rohrleitungsabschnitt 14 montiert sind und von dem entsprechenden Rohrleitungsabschnitt 12, 14 abstehen. Die Funktionsweise einer hydraulischen Regelgruppe 10 ist bekannt. Sowohl in der Pumpe 20 als auch im Mischventil 18 befinden sich elektronische Komponenten, die vor großer Wärme geschützt werden müssen.

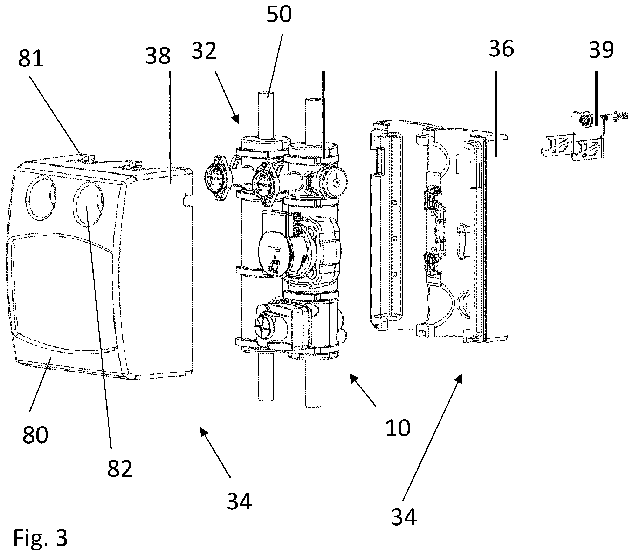

In Figur 2 befindet sich die hydraulische Regelgruppe 10 montiert im Inneren eines Isolationssystems. Das Isolationssystem umfasst, wie insbesondere in Fig. 3 zu erkennen ist, eine erste Dämmvorrichtung 32 und eine zweite Dämmvorrichtung 34. Die erste Dämmvorrichtung 32 dient dazu, die hydraulische Regelgruppe 10 thermisch und diffusionsdicht zu isolieren. Die zweite Dämmvorrichtung 34 ist vorgesehen, um die thermische Isolation der hydraulischen Regelgruppe 10 noch weiter zu verbessern und die isolierte hydraulischen Regelgruppe 10 vor mechanischen Einflüssen zu schützen.

Figur 3 zeigt die hydraulische Regelgruppe 10 zusammen mit einer daran befestigten ersten Dämmvorrichtung 32 sowie einer zweiten Dämmvorrichtung 34. Die zweite Dämmvorrichtung 34 ist in demontierten Zustand gezeigt, wobei die zweite Dämmvorrichtung 34 eine Rückwand 36 und einen Deckel 38 umfasst. Die Rückwand 36 kann zusammen mit dem Verbindungsrohr 17 mittels einer Halterung 39 an einer feststehenden Wand, wie etwa einer Gebäudewand befestigt werden.

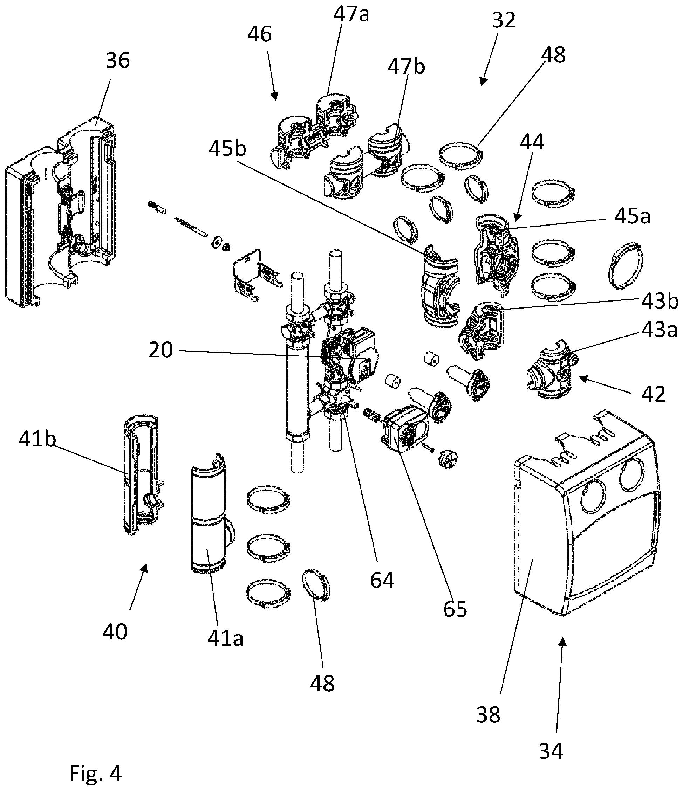

In Figur 4 ist das Isolationssystem mit der hydraulischen Regelgruppe 10 in zerlegtem Zustand gezeigt. Die erste Dämmvorrichtung 32 umfasst vier verschiedene Dämmungsmodule, nämlich ein Dämmungsmodul erster Art 40, ein Dämmungsmodul zweiter Art 42, ein Dämmungsmodul dritter Art 44 und ein Dämmungsmodul vierter Art 46. Jedes der Dämmungsmodule 40, 42, 44, 46 umfasst zwei Schalenteile 41a, 41b; 43a, 43b; 45a, 45b; 47a, 47b sowie eine unterschiedliche Anzahl von Spannringen 48.

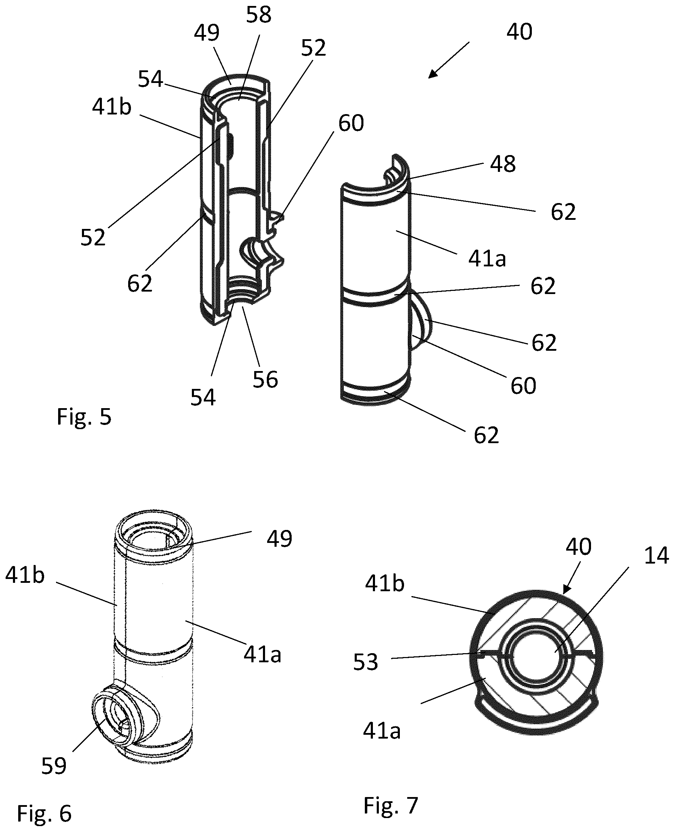

In den Figuren 5 und 6 ist das Dämmungsmodul erster Art 40 vergrößert zu erkennen. Das Dämmungsmodul erster Art 40 dient dazu, den zweiten Rohrleitungsabschnitt 14 der hydraulischen Regelgruppe 10 sowie Teile des Bypassrohrs 16 thermisch und diffusionsdicht zu isolieren.

Die Innenkontur jedes Schalenteils 41a, 41b ist hierbei so ausgebildet, dass das Dämmungsmodul erster Art im montierten Zustand passgenau an dem zweiten Rohrleitungsabschnitt 14 anliegt. Die Außenkontur jedes Schalenteils 41a, 41b ist der Innenkontur sehr ähnlich, was den Vorteil hat, dass jedes Schalenteil 41a, 41b eine im Wesentlichen konstante Wandstärke aufweist und somit die thermischen Eigenschaften und die Diffusionseigenschaften an allen Stellen des Schalenteils 41a, 41b sehr ähnlich oder sogar identisch sind.

Im miteinander verbundenen Zustand bilden die beiden als Halbschalen ausgebildeten Schalenteile 41a, 41b einen einstückigen rohrförmigen Körper mit einer Längsachse, wobei die beiden Schalenteile 41a, 41b an den sich entlang der Längsachse des Dämmungsmoduls erster Art 40 erstreckenden Stirnseiten mittels einer ersten Verbindungart diffusionsdicht miteinander verbunden sind. Die beiden Schalenteile 41a, 41b sind insbesondere so miteinander verbunden, dass in radialer Richtung kein durchgehender Spalt zwischen den beiden Schalenteilen 41a, 41b vorhanden ist.

Hierfür sind an der Stirnseite eines Schalenteils 41b sich entlang der Längsachse des Dämmungsmoduls erster Art 40 erstreckende nutartige Rinnen 52 vorgesehen, in die korrespondierende Laschen (nicht dargestellt) oder Rinnen des anderen Schalenteils 41a eingreifen. Hierdurch entsteht wie in Fig. 7 dargestellt ist, in radialer Richtung eine versetzte Verbindungslinie 53 zwischen den beiden Schalenteilen 41a, 41b, so dass Flüssigkeit oder Wasserdampf nicht ungehindert von der Außenseite des Dämmungsmodul erster Art 40 in den Hohlraum des verbundenen Dämmungsmodul erster Art 40 eindringen kann.

An jedem Stirnende des Dämmungsmoduls erster Art 40 befindet sich eine Stirnwand 54 mit einer Öffnung 56, 58. Die Öffnungen 56, 58 sind so dimensioniert, dass ein aus der hydraulischen Regelgruppe 10 herausragendes Rohrleitungsstück 15 oder entsprechendes Rohransatzstück passgenau umfasst wird.

An einer Stirnseite befindet sich ein Verbindungselement erster Art 49, um das Dämmungsmodul erster Art 40 mit einem weiteren Dämmungsmodul, insbesondere mit dem Dämmungsmodul vierter Art 46 diffusionsdicht zu verbinden. Das Verbindungselement erster Art 49 ist Teil einer zweiten Verbindungart, ist an jedem Schalenteil 41a, 41b an der Stirnseite als Vorsprung ausgestaltet und erstreckt sich in Längsrichtung des Dämmungsmodul erster Art 40. Im montierten Zustand bilden die beiden Vorsprünge einen umlaufenden Rand, der sich in Längsrichtung des Dämmungsmodul erster Art 40 erstreckt.

Im konkreten Fall ist das Dämmungsmodul erster Art 40 zusätzlich ausgelegt, auch das Bypassrohr 16 zumindest abschnittsweise diffusionsdicht zu isolieren. Hierfür umfasst das Dämmungsmodul erster Art 40 ein Ansatzstück 60.

Um das Dämmungsmodul erster Art 40 fest an dem zweiten Rohrleitungsabschnitt 14 zu befestigen und an den zweiten Rohrleitungsabschnitt 14 fest anzudrücken, sind entsprechende Spannringe 48 vorgesehen. Die Spannringe 48 sind an den beiden Stirnseiten sowie in der Mitte des Dämmungsmoduls erster Art 40 vorgesehen. Auf der Außenseite der beiden Schalenteile 41a, 41b sind hierfür Positionierungshilfen in Form von Querrillen 62 vorgesehen.

Ein weiterer Spannring 48 sorgt dafür, dass das Ansatzstück 60 fest an dem Bypassrohr 16 montiert werden kann.

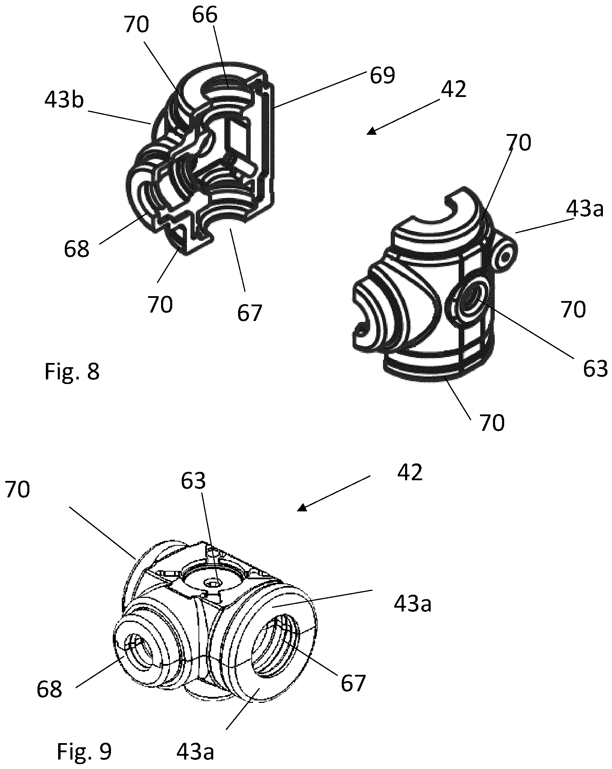

Figuren 8 und 9 zeigen das Dämmungsmodul zweiter Art 42 sowohl in einem getrennten als auch in einem verbundenen Zustand. Das Dämmungsmodul zweiter Art 42 dient dazu, die hydraulische Regelgruppe 10 im Bereich des Mischventils 18 diffusionsdicht zu isolieren. Das Mischventil 18 umfasst einen mechanischen Teil 64, der in den ersten Rohrleitungsabschnitt 12 eingebaut ist und ein Gehäuse 65 mit einer elektronischen Steuerung (siehe Fig. 4). Da die elektronische Steuerung hitzeempfindlich ist, wird diese thermisch gegenüber dem ersten Rohrleitungsabschnitt 12 isoliert. Dies erfolgt dadurch, dass sich das Gehäuse 65 im montierten Zustand des Isolationssystems außerhalb der ersten Dammvorrichtung 32 befindet.

Das Dämmungsmodul zweiter Art 42 weist in analoger Weise zu dem Dämmungsmodul erster Art 40 zwei Schalenteile 43a, 43b auf, die im montierten Zustand einen Hohlraum ausbilden, welcher an den mechanischen Teil 64 des Mischventils 18 anpasst ist. Entsprechend der Form des Mischventils 18 weist das Dämmungsmodul zweiter Art 44 im verbundenen Zustand zwei entgegengesetzt liegende Stirnseiten mit jeweils einer Öffnung 66, 67 sowie ein Ansatzstück 68 auf. Die Öffnungen 66, 67 sind so dimensioniert, dass ein aus der hydraulischen Regelgruppe 10 herausragendes Rohrleitungsstück 15 oder entsprechendes Rohransatzstück passgenau umfasst wird. Das Ansatzstück 68 dient wie das Ansatzstück 60 des Dämmungsmodul erster Art 40 der diffusionsdichten Isolierung des Bypassrohrs 16. Weiterhin ist in dem Schalenelement 43a ein Durchgang 63 vorgesehen, um den mechanischen Teil 64 des Mischventils 18 mit dem Gehäuse 65 des Mischventils 18 verbinden zu können.

Die Außenkontur jedes Schalenteils 43a, 43b ist der Innenkontur sehr ähnlich. Die beiden Schalenteile 43a, 43b sind als Halbschalen möglichst spiegelsymmetrisch ausgebildet und können so miteinander verbunden werden, dass in radialer Richtung kein durchgehender Spalt zwischen den beiden Schalenteilen 43a, 43b vorhanden ist. Hierfür sind an den Stirnseiten entsprechende nutartige Rinnen 69 vorgesehen, die in korrespondierende Laschen oder Rinnen (nicht dargestellt) des anderen Schalenteils 43a eingreifen, so dass in radialer Richtung eine versetzte Verbindungslinie zwischen den beiden Schalenteilen 43a, 43b ausgebildet ist.

Sowohl am Ansatzstück 68 als auch an einer Stirnseite des Dämmungsmodul zweiter Art 42 befindet sich ein Verbindungselement zweiter Art 70. Das Verbindungselement zweiter Art 70 ist komplementär zu dem Verbindungselement erster Art 49 ausgebildet, um eine diffusionsdichte Steckverbindung auszubilden. Das Verbindungselement zweiter Art 70 wird mittels eines in radialer Richtung nach innen versetztem Absatz an der Außenseite der beiden zwei Schalenteile 43a, 43b gebildet, wobei der Absatz im verbundenen Zustand des Dämmungsmoduls zweiter Art 42 umlaufend ausgebildet ist.

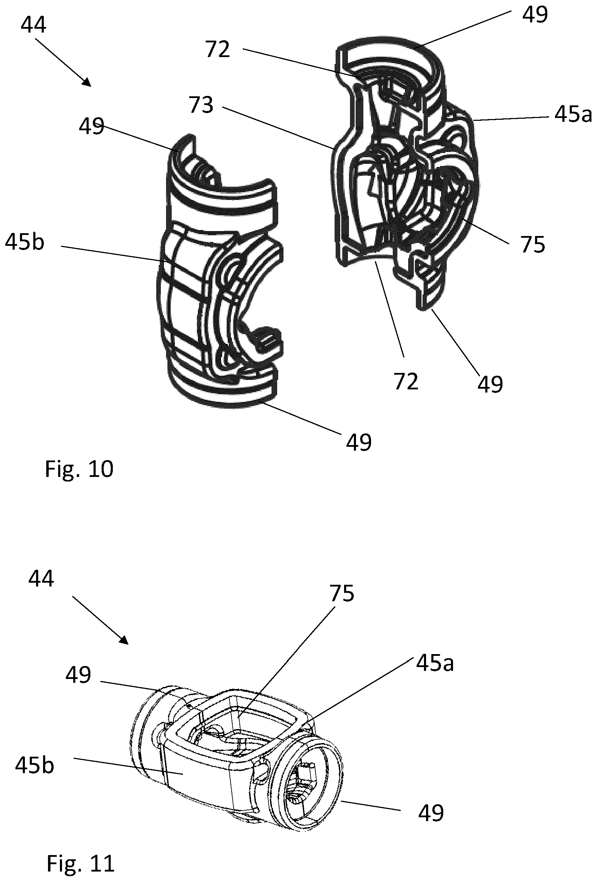

Die Figuren 10 und 11 zeigen das Dämmungsmodul dritter Art 44 in vergrößerter Ansicht. In Fig. 10 ist ein Dämmungsmodul dritter Art 44 gemäß einer ersten Ausführungsform mit zerlegten Schalenteilen 45a, 45b gezeigt. Fig 11 zeigt eine zweite Ausführungsform eines Dämmungsmoduls dritter Art mit verbundenen Schalenteilen 45a, 45b. Die beiden Ausführungsformen unterscheiden sich optisch, besitzen jedoch den gleichen Aufbau.

Das Dämmungsmodul dritter Art 44 hat die Aufgabe die hydraulische Regelgruppe 10 im Bereich der Pumpe 20 thermisch und diffusionsdicht zu isolieren. Entsprechend der Bauform der Pumpe 20 bilden die beiden Schalenteile 45a und 45b einen Hohlraum aus, welcher der Pumpe 20 und den entsprechenden Rohrleitungsanschlüssen angepasst ist. So weist das Dämmungsmodul dritter Art 44 zwei entgegengesetzt liegende Stirnseiten mit Öffnungen 72 auf, die die entsprechenden Rohrleitungsanschlüsse passgenau umfassen. An den entgegengesetzt liegenden Stirnseiten befinden sich jeweils Verbindungselemente erster Art 49.

Weiterhin ist eine Öffnung 75 zur Aufnahme der Pumpe 20 vorgesehen. Die Pumpe 20 wird einseitig von der thermischen Isolierung ausgenommen, um eine mögliche Überhitzung der Pumpe 20 zu vermeiden.

Die Außenkontur jedes Schalenteils 45a, 45b ist der Innenkontur sehr ähnlich.

Die beiden Schalenteile 45a, 45b sind als Halbschalen möglichst spiegelsymmetrisch ausgebildet und können so miteinander verbunden werden, dass in radialer Richtung kein durchgehender Spalt zwischen den beiden Schalenteilen 45a, 45b vorhanden ist. Hierfür sind analog, wie bereits in Zusammenhang mit dem Dämmungsmodul erster Art 40 und Dämmungsmodul zweiter Art 42 angeführt, an den Stirnseiten eines Schalenteils 45a entsprechende nutartige Rinnen 73 vorgesehen, die in korrespondierende Laschen oder Rinnen (nicht dargestellt) des anderen Schalenteils 45b eingreifen, so dass in radialer Richtung eine versetzte Verbindungslinie zwischen den beiden Schalenteilen 45a, 45b ausgebildet ist.

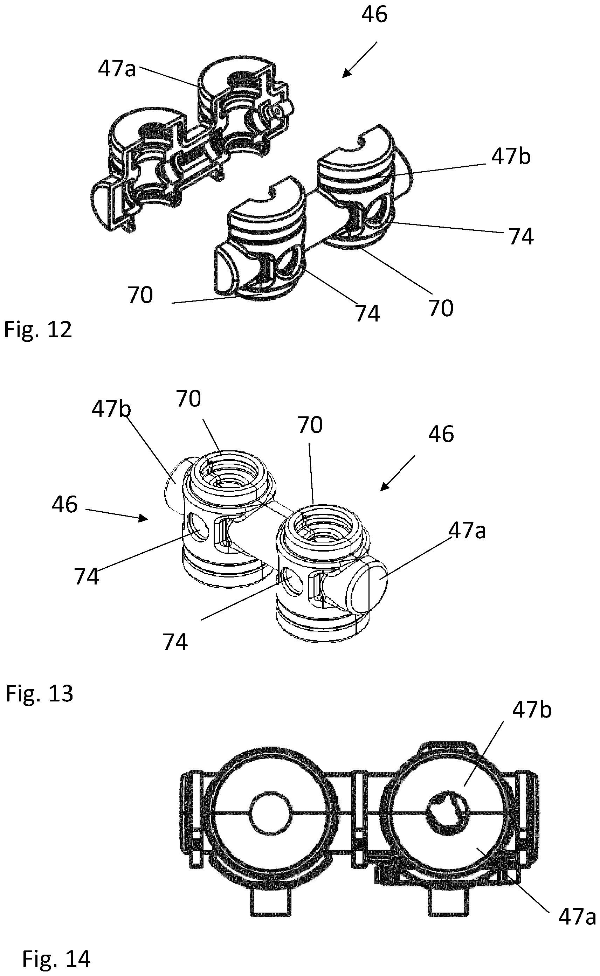

In den Fig. 12 bis 14 ist das Dämmungsmodul vierter Art 46 vergrößert dargestellt. Das Dämmungsmodul vierter Art 46 dient der diffusionsdichten und thermischen Isolierung der Thermometer 21, 22 der hydraulischen Regelgruppe 10. Die beiden Schalenteile 47a, 47b sind analog wie die Schalenteile des Dämmungsmoduls erster Art 40, des Dämmungsmoduls zweiter Art 42 und des Dämmungsmoduls dritter Art 44 und des Dämmungsmoduls vierter Art 44 in Form von Halbschalen möglichst spiegelsymmetrisch ausgebildet und können so miteinander verbunden werden, dass in radialer Richtung kein durchgehender Spalt zwischen den beiden Schalenteilen 47a, 47b vorhanden ist. Auch hier sind entsprechende Mittel vorhanden. Die Innenkontur eines Schalenteils 47a, 47b entspricht im Wesentlichen der Außenkontur des Schalenteils 47a, 47b.

Um das Dämmungsmodul vierter Art 46 mit dem Dämmungsmodul erster Art 40 und dem Dämmungsmodul dritter Art 44 diffusionsdicht verbinden zu können, verfügt das Dämmungsmodul über Verbindungselemente zweiter Art 70.

In dem Schalenteil 47b sind Durchlässe 74 vorgesehen, durch die die Thermometer 21, 22 der hydraulischen Regelgruppe 10 montiert werden können. Diese sind erforderlich, um die von den Thermometern 21, 22 gemessene Temperatur von außen optisch erfassen zu können.

Verallgemeinernd sind die einzelnen Schalenteile 41a, 41b; 43a, 43b; 45a, 45b; 47a, 47b eines jeden Dämmungsmoduls 40, 42, 44, 46, soweit es die Geometrie des zu isolierenden Abschnitts einer hydraulischen Regelgruppe 10 zulässt, spiegelsymmetrisch ausgestaltet, wobei die beiden Schalenteile 41a, 41b; 43a, 43b; 45a, 45b; 47a, 47b eines jeden Dämmungsmoduls 40, 42, 44, 46 mittels einer ersten Verbindungsart diffusionsdicht verbunden sind und im verbundenen Zustand jeweils einen einheitlichen Körper mit einem Hohlraum im Inneren ausbilden. Der Hohlraum eines jeden Dämmungsmoduls 40, 42, 44, 46 ist so gestaltet, dass das zu isolierende Bauteil vollständig umgeben ist. Da die zu isolierenden Bauteile wiederum mit anderen Bauteilen verbunden sind, verfügt jedes Dämmungsmodul an den Stellen, an denen zwei Dämmungsmodule miteinander verbunden werden sollen, über Verbindungselemente. Die Verbindungselement sind hierbei so aufeinander abgestimmt, dass zwischen zwei verbundenen Dämmungsmodulen eine diffusionsdichte zweite Verbindungsart entsteht. Je nachdem, ob das Dämmungsmodul einen Endabschnitt des Isolationssystems darstellt oder an ein anderes Dämmungsmodul angrenzt, weist das Dämmungsmodul eine abschließende Stirnseite oder ein Verbindungselement auf.

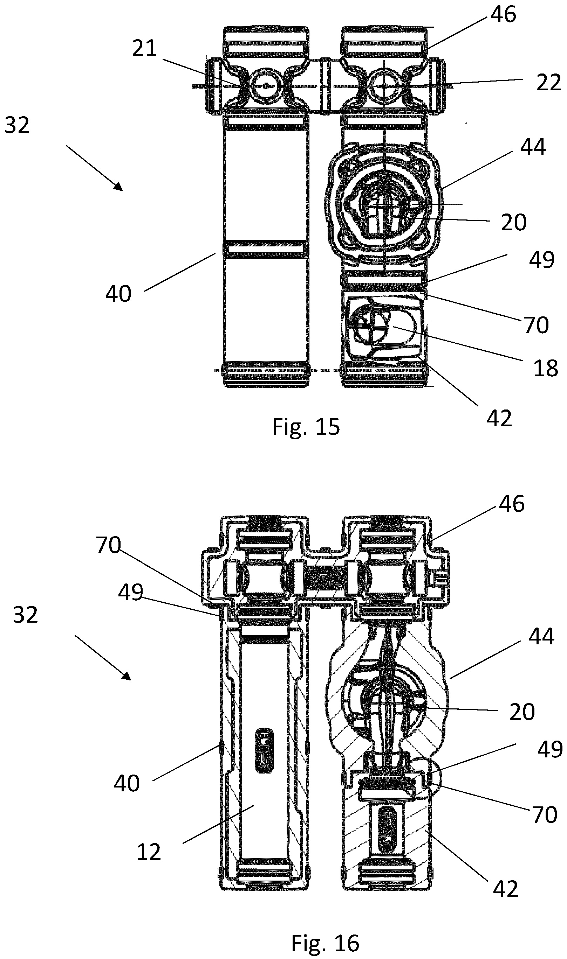

Die Figuren 15 und 16 zeigen die hydraulische Regelgruppe 10 in einem Zustand, in dem die erste Dämmvorrichtung 32 vollständig an der hydraulischen Regelgruppe 10 zusammen mit den Thermometern 21, 22, der Pumpe 20 und dem Mischventil 18 montiert ist. Da die einzelnen Dämmungsmodule 40, 42, 44 und 46 eine Außenkontur aufweisen, die der Innenkontur im Wesentlichen entspricht, ist auch in einem Zustand, in dem die hydraulische Dämmvorrichtung 10 vollständig montiert ist, die Grundform der hydraulischen Regelgruppe 10 zu erkennen.

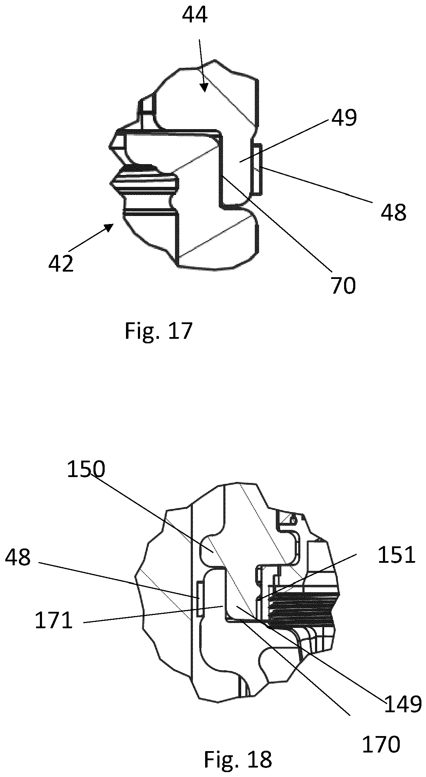

In der Fig. 17 ist beispielhaft eine Steckverbindung zwischen dem Dämmungsmodul zweiter Art 42 und dem Dämmungsmodul dritter Art 44 gezeigt, die mittels des Verbindungselements erster Art 49 und des Verbindungselements zweiter Art 70 ausgebildet ist. Das Verbindungselement erster Art 49 und das Verbindungselement zweiter Art 70 bilden eine zweite Verbindungsart in Form einer Steckverbindung, bei der eine versetzte Verbindungslinie ausgebildet ist. Es ist somit kein radial durchgehender Spalt zwischen der Außenseite der beiden Dämmungsmodule und Innenseite der beiden Dämmungsmodule vorhanden. Um den Spaltabstand zwischen dem Dämmungsmodul zweiter Art 42 und dem Dämmungsmodul dritter Art 44 weiter zu verringern, ist im Kontaktbereich zwischen dem Dämmungsmodul zweiter Art 42 und dem Dämmungsmodul dritter Art 44 ein Spannring 48 vorgesehen, der Außen an dem Dämmungsmodul dritter Art 44 anliegt.

Figur 18 zeigt eine weitere Ausführungsform einer Steckverbindung zwischen zwei Dämmungsmodulen. Diese Ausführungsform einer Steckverbindung unterscheidet sich dadurch, dass das Verbindungselement erster Art 49 einen Anschlag 150 und eine Rastnase 151 aufweist und das Verbindungselement zweiter Art 170 als zur Stirnseite offene Nut 171 ausgebildet ist.

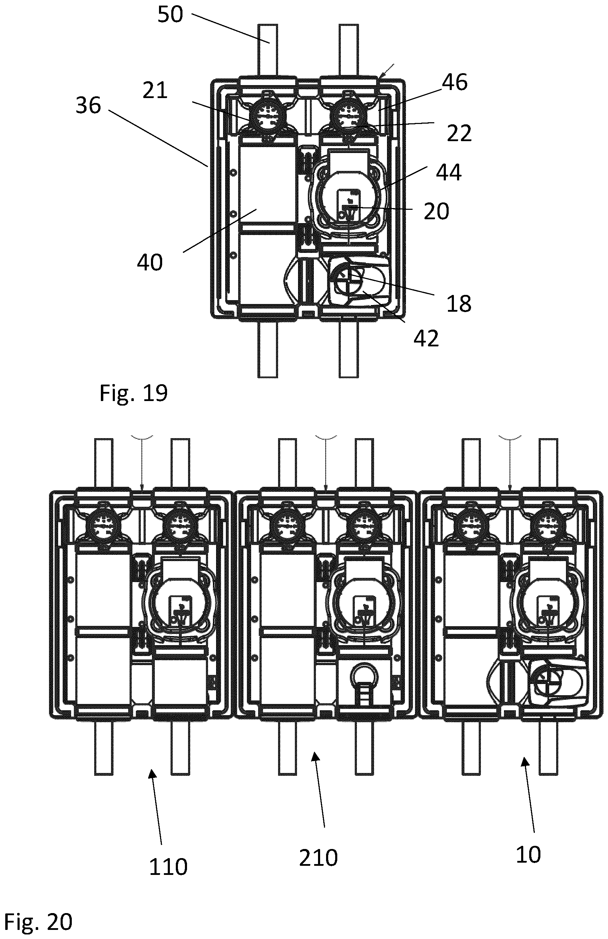

Wie in Figur 4 zu erkennen ist, ist das Bodenelement 36 der zweiten Dämmvorrichtung 34 profiliert ausgebildet, um die mit der ersten Dämmvorrichtung 32 versehene hydraulische Regelgruppe 10 passgenau in dem Bodenelement 36 aufzunehmen. In Fig. 19 ist die hydraulische Regelgruppe 10 zusammen mit der ersten Dämmvorrichtung 32 in dem Bodenelement 36 in einer Ansicht von vorne zu sehen.

Der Deckel 38 der zweiten Dämmvorrichtung 34 hat eine quaderförmige Grundform mit einer Vorderseite 80 und vier Seitenteilen, wobei der Deckel 38 lösbar mit der Rückwand 36 verbunden ist. Die Vorderseite 80, die vier Seitenteile und Rückwand 36 bilden zusammen ein kastenförmiges Gehäuse, im welchem die mit der ersten Dämmvorrichtung 32 versehene hydraulische Regelgruppe 10 untergebracht ist. Der Deckel 38 ist ohne Profilierung für die hydraulische Regelgruppe 10 ausgebildet, so dass innerhalb der zweiten Dämmvorrichtung 34 Luft zirkulieren kann. In dem Deckel 38 befinden sich Lüftungsschlitze 81, durch die Luft in das geschlossene Gehäuse eindringen kann und warme Luft wieder entweichen kann.

Üblicherweise besteht die zweite Dämmvorrichtung 34 aus einem nichttransparenten Material. Um die Thermometer 21, 22 ablesen zu können, sind auf der Vorderseite des Deckels Sichtöffnungen vorgesehen, durch die die Thermometer 21, 22 einsehbar sind.

Die Dämmungsmodule 40, 42, 44, 46 sind aus einem Material mit einem vergleichsweise hohen Wasserdampf-Diffusionswiderstand hergestellt, insbesondere aus einem Material mit einem höheren Wasserdampf-Diffusionswiderstand als das Material, aus welchem die zweite Dämmvorrichtung 34 hergestellt ist.

Insbesondere sind die Dämmungsmodule 40, 42, 44, 46 aus einem vernetzen Polyethylen-Schaum XPE und der Deckel 38 sowie die Rückwand 36 der zweiten Dämmvorrichtung 34 aus einem geschäumten Polystyrol wie etwa oder einem geschäumten Polypropylen wie etwa EPP hergestellt.

Das Isolationssystem wurde in den beigefügten Zeichnungen anhand einer konkreten hydraulischen Regelgruppe 10 beschrieben. Es versteht sich, dass die einzelnen Dämmungsmodule 40 ,42, 44, 46 bei anderen hydraulischen Regelgruppen 110; 210 unterschiedlich geformt sein können, um passgenau an der entsprechenden hydraulischen Regelgruppe 10, 110, 210 anzuliegen. In Fig. 20 sind beispielhaft neben der bereits beschriebenen hydraulischen Regelgruppe 10 zwei weitere hydraulische Regelgruppen 110, 210 dargestellt, bei denen die Bauteile der hydraulische Regelgruppe verändert sind. Konkret wurde das Mischventil weggelassen bzw. verändert ausgebildet.

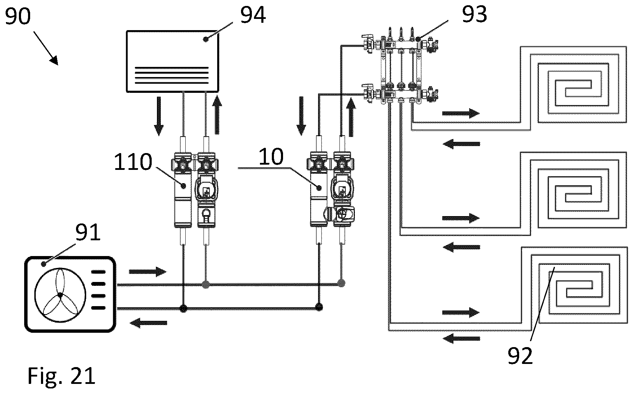

In Figur 21 ist ein Anwendungsbeispiel gezeigt, in der die beschriebene hydraulische Regelgruppe 10 mit einem aus einer ersten Dämmvorrichtung 32 und einer zweiten Dämmvorrichtung 34 bestehenden Isolationssystem eingesetzt werden kann.

Die Figur 21 zeigt insbesondere eine kombinierte Kühl- und Heizanlage mit einer Wärmepumpe, die Wärme oder Kälte zu einem Gebläse-Konvektoren sowie einer Flächenheizung bzw. eine passive Flächenkühlung führt.

Im Detail umfasst die Kühl- und Heizanlage 90 eine Wärmepumpe 91, eine erste hydraulische Regelgruppe 10, eine Flächenheizung bzw. Flächenkühlung 92 mit einem Verteilersystem 93 sowie eine zweite hydraulische Regelgruppe 110 und einen Gebläsekonvektor 94.

In einem Kühlbetrieb fließt ein kaltes Medium durch den Vorlauf der ersten hydraulischen Regelgruppe 10 über das Verteilersystem 93 zu der Flächenkühlung 92. In der Flächenkühlung wird das Medium erwärmt und strömt über das Verteilersystem 93 durch den Rücklauf der ersten hydraulischen Regelgruppe 10 wieder zurück zur Wärmepumpe 90.

Weiterhin fließt kaltes Medium durch den Vorlauf der zweiten hydraulischen Regelgruppe 110 zu dem Gebläsekonvektor 94. Das erwärmte Fluid strömt anschließend durch den Rücklauf der zweiten hydraulischen Regelgruppe 110 wieder zurück zu der Wärmepumpe 90.

im Heizbetrieb erzeugt die Wärmepumpe Wärme, die durch den Vorlauf der ersten hydraulischen Regelgruppe 10 über das Verteilersystem 93 der Flächenheizung 92 zugeführt wird. In der Flächenheizung wird das Medium abgekühlt und strömt über das Verteilersystem 93 durch den Rücklauf der ersten hydraulischen Regelgruppe 10 wieder zurück zur Wärmepumpe 90. Ebenso fließt warmes Medium durch den Vorlauf der zweiten hydraulischen Regelgruppe 110 zu dem Gebläsekonvektor 94. Das abgekühlte Medium strömt anschließend durch den Rücklauf der zweiten hydraulischen Regelgruppe 110 wieder zurück zu der Wärmepumpe 90.

Mittels des dargestellten Isoliersystems kann ein- und dieselbe hydraulische Regelgruppe 10, 110 ohne Umbaumaßnahmen sowohl für den Kühlbetrieb als auch für den Heizbetrieb verwendet werden.

Wenn auch nicht dargestellt, so sind im Rahmen der vorliegenden Erfindung auch Ausführungsformen umfasst, bei denen einzelne Merkmale weggelassen wurden oder anders kombiniert wurden. Das Isolationssystem wurde in Zusammenhang mit hydraulischen Regelgruppen dargestellt. Die vorliegende Erfindung umfasst auch Isolationssysteme, die bei anderen Anwendungen als hydraulische Regelgruppen eingesetzt werden können.

## Patentansprüche

1. Isolationssystem geeignet zur thermischen Isolierung von Bauteilen einer hydraulische Regelgruppe (10) umfassend eine erste Dämmvorrichtung (32) und eine zweite Dämmvorrichtung (34), wobei die erste Dämmvorrichtung (32) wenigstens ein Dämmungsmodul (40, 42, 44, 46) aufweist, das im Inneren einen Hohlraum besitzt und aus wenigstens zwei Schalenteilen (41a, 41b, 43a, 43b, 45a, 45b, 47a, 47b) zusammengesetzt ist,
wobei die zweite Dämmvorrichtung (34) die erste Dämmvorrichtung (32) zumindest abschnittsweise umgibt und wobei die erste Dämmvorrichtung (32) aus einem diffusionsdichten Material hergestellt ist.

2. Isolationssystem nach Anspruch 1, **dadurch gekennzeichnet, dass** das Dämmungsmodul (40, 42, 44, 46) aus einem vernetzten Polyethylen-Schaum hergestellt ist.

3. Isolationssystem nach einem der vorhergehenden Ansprüche, **dadurch gekennzeichnet, dass** die wenigstens zwei Schalenteile (41a, 41b, 43a, 43b, 45a, 45b, 47a, 47b) mittels einer ersten Verbindungart, insbesondere mittels einer Steckverbindung miteinander verbindbar sind.

4. Isolationssystem nach Anspruch 3, **dadurch gekennzeichnet, dass** die erste Verbindungart diffusionsdicht ist.

5. Isolationssystem nach einem der vorhergehenden Ansprüche, **dadurch gekennzeichnet, dass** die Innenkontur des Dämmungsmoduls (40, 42, 44, 46) und die Außenkontur des Dämmungsmoduls (40, 42, 44, 46) ähnlich sind.

6. Isolationssystem nach einem der vorhergehenden Ansprüche, **dadurch gekennzeichnet, dass** ein erstes Dämmungsmodul (40) und ein zweites (42) Dämmungsmodul vorgesehen sind, wobei das erste Dämmungsmodul (40) und das zweite Dämmungsmodul (42) diffusionsdicht miteinander verbunden sind.

7. Isolationssystem nach Anspruch 6, **dadurch gekennzeichnet, dass** das erste Dämmungsmodul (40) und das zweite Dämmungsmodul (42) unterschiedliche Formen aufweisen.

8. Isolationssystem nach Anspruch 6 oder 7, **dadurch gekennzeichnet, dass** das erste Dämmungsmodul (40) ein Verbindungselement erster Art (49) und das zweite Dämmungsmodul (42) ein Verbindungselement zweiter Art (70) aufweisen, wobei das erste Dämmungsmodul (40) und das zweite Dämmungsmodul (42) mittels des Verbindungselements erster Art (49) und des Verbindungselements zweiter Art (70) miteinander verbindbar sind, insbesondere eine diffusionsdichte Steckverbindung ausbilden.

9. Isolationssystem nach einem der vorhergehenden Ansprüche, **dadurch gekennzeichnet, dass** eine mechanische Spannvorrichtung, insbesondere ein Spannring (48) vorgesehen ist.

10. Isolationssystem nach Anspruch 9, **dadurch gekennzeichnet, dass** in einem Zustand, in dem das erste Dämmungsmodul (40) und das zweite Dämmungsmodul (42) miteinander verbunden sind, zwischen dem ersten Dämmungsmodul (40) und dem zweiten Dämmungsmodul (42) ein Kontaktbereich ausgebildet ist, wobei im Kontaktbereich an der Außenseite des ersten Dämmungsmoduls (40) oder an der Außenseite des zweiten Dämmungsmoduls (42) eine mechanische Spannvorrichtung, insbesondere ein Spannring (48) vorgesehen ist.

11. Isolationssystem nach einem der vorhergehenden Ansprüche, **dadurch gekennzeichnet, dass** die zweite Dämmvorrichtung (34) als Gehäuse mit einer Rückwand (36) und einem Deckel (38) ausgebildet, wobei die erste Dämmvorrichtung (32) in dem Gehäuse angeordnet ist.

12. Hydraulische Regelgruppe umfassend wenigstens einen fluidführenden Rohrleitungsabschnitt (12, 14) sowie wenigstens eines der Bauteile Mischventil (18) Steuer- und/oder Regeleinheit, Pumpeneinheit (20), wobei wenigstens eines der Bauteile Mischventil (18), Steuer- oder Regeleinheit, Pumpeneinheit (20) an dem fluidführenden Rohrleitungsabschnitt (12, 14) befestigt ist und wobei wenigstens eines der Bauteile Mischventil (18), Steuer- und/oder Regeleinheit, Pumpeneinheit (20) und/oder der wenigstens eine fluidführende Rohrleitungsabschnitt (12, 14) mit einem Dämmungsmodul (40, 42, 44, 46) nach einem der vorhergehenden Ansprüche umgeben ist.

13. Hydraulische Regelgruppe nach Anspruch 12, **dadurch gekennzeichnet, dass** das Dämmungsmodul (40, 42, 44, 46) wenigstens eines der Bauteile Mischventil (18), Steuer- und/oder Regeleinheit, Pumpeneinheit (20) und/oder den wenigstens einen fluidführenden Rohrleitungsabschnitt (12, 14) passgenau umgibt.

14. Hydraulische Regelgruppe nach Anspruch 12 oder 13, **dadurch gekennzeichnet, dass** jedes der Bauteile der hydraulischen Regelgruppe (10) und der wenigstens eine fluidführende Rohrleitungsabschnitt (12, 14) mit einem Dämmungsmodul (40, 42, 44, 46) umgeben ist, wobei die Dämmungsmodule (40, 42, 44, 46) jeweils diffusionsdicht miteinander verbunden sind.

15. Hydraulische Regelgruppe nach einem der Ansprüche 12 bis 14, **dadurch gekennzeichnet, dass** die zweite Dämmvorrichtung (34) ein Gehäuse bildet, in der die mit der ersten Dämmvorrichtung (32) versehene hydraulische Regelgruppe (32) angeordnet ist.

## Geänderte Patentansprüche

### Geänderte Patentansprüche gemäss Regel 137(2) EPÜ.

1. Isolationssystem geeignet zur thermischen Isolierung von Bauteilen einer hydraulische Regelgruppe (10) umfassend eine erste Dämmvorrichtung (32) und eine zweite Dämmvorrichtung (34), wobei die erste Dämmvorrichtung (32) wenigstens ein Dämmungsmodul (40, 42, 44, 46) aufweist, das im Inneren einen Hohlraum besitzt und aus wenigstens zwei Schalenteilen (41a, 41b, 43a, 43b, 45a, 45b, 47a, 47b) zusammengesetzt ist,
wobei die zweite Dämmvorrichtung (34) die erste Dämmvorrichtung (32) zumindest abschnittsweise umgibt und wobei die erste Dämmvorrichtung (32) aus einem diffusionsdichten Material hergestellt ist, **dadurch gekennzeichnet, dass** ein erstes Dämmungsmodul (40) und ein zweites (42) Dämmungsmodul vorgesehen sind, wobei das erste Dämmungsmodul (40) und das zweite Dämmungsmodul (42) diffusionsdicht miteinander verbunden sind.

2. Isolationssystem nach Anspruch 1, **dadurch gekennzeichnet, dass** das Dämmungsmodul (40, 42, 44, 46) aus einem vernetzten Polyethylen-Schaum hergestellt ist.

3. Isolationssystem nach einem der vorhergehenden Ansprüche, **dadurch gekennzeichnet, dass** die wenigstens zwei Schalenteile (41a, 41b, 43a, 43b, 45a, 45b, 47a, 47b) mittels einer ersten Verbindungart, insbesondere mittels einer Steckverbindung miteinander verbindbar sind.

4. Isolationssystem nach Anspruch 3, **dadurch gekennzeichnet, dass** die erste Verbindungart diffusionsdicht ist.

5. Isolationssystem nach einem der vorhergehenden Ansprüche, **dadurch gekennzeichnet, dass** die Innenkontur des Dämmungsmoduls (40, 42, 44, 46) und die Außenkontur des Dämmungsmoduls (40, 42, 44, 46) ähnlich sind, so dass das Dämmungsmodul eine konstante Dicke aufweist.

6. Isolationssystem nach einem der vorhergehenden Ansprüche, **dadurch gekennzeichnet, dass** das erste Dämmungsmodul (40) und das zweite Dämmungsmodul (42) unterschiedliche Formen aufweisen.

7. Isolationssystem nach einem der vorhergehenden Ansprüche, **dadurch gekennzeichnet, dass** das erste Dämmungsmodul (40) ein Verbindungselement erster Art (49) und das zweite Dämmungsmodul (42) ein Verbindungselement zweiter Art (70) aufweisen, wobei das erste Dämmungsmodul (40) und das zweite Dämmungsmodul (42) mittels des Verbindungselements erster Art (49) und des Verbindungselements zweiter Art (70) miteinander verbindbar sind, insbesondere eine diffusionsdichte Steckverbindung ausbilden.

8. Isolationssystem nach einem der vorhergehenden Ansprüche, **dadurch gekennzeichnet, dass** eine mechanische Spannvorrichtung, insbesondere ein Spannring (48) vorgesehen ist.

9. Isolationssystem nach Anspruch 8, **dadurch gekennzeichnet, dass** in einem Zustand, in dem das erste Dämmungsmodul (40) und das zweite Dämmungsmodul (42) miteinander verbunden sind, zwischen dem ersten Dämmungsmodul (40) und dem zweiten Dämmungsmodul (42) ein Kontaktbereich ausgebildet ist, wobei im Kontaktbereich an der Außenseite des ersten Dämmungsmoduls (40) oder an der Außenseite des zweiten Dämmungsmoduls (42) eine mechanische Spannvorrichtung, insbesondere ein Spannring (48) vorgesehen ist.

10. Isolationssystem nach einem der vorhergehenden Ansprüche, **dadurch gekennzeichnet, dass** die zweite Dämmvorrichtung (34) als Gehäuse mit einer Rückwand (36) und einem Deckel (38) ausgebildet, wobei die erste Dämmvorrichtung (32) in dem Gehäuse angeordnet ist.

11. Hydraulische Regelgruppe umfassend ein Isolationssystem nach einem der vorhergehenden Ansprüche, wenigstens einen fluidführenden Rohrleitungsabschnitt (12, 14) sowie wenigstens eines der Bauteile Mischventil (18) Steuer- und/oder Regeleinheit, Pumpeneinheit (20), wobei wenigstens eines der Bauteile Mischventil (18), Steuer- oder Regeleinheit, Pumpeneinheit (20) an dem fluidführenden Rohrleitungsabschnitt (12, 14) befestigt ist und wobei wenigstens eines der Bauteile Mischventil (18), Steuer- und/oder Regeleinheit, Pumpeneinheit (20) und/oder der wenigstens eine fluidführende Rohrleitungsabschnitt (12, 14) mit einem Dämmungsmodul (40, 42, 44, 46) umgeben ist.

12. Hydraulische Regelgruppe nach Anspruch 11, **dadurch gekennzeichnet, dass** das Dämmungsmodul (40, 42, 44, 46) wenigstens eines der Bauteile Mischventil (18), Steuer- und/oder Regeleinheit, Pumpeneinheit (20) und/oder den wenigstens einen fluidführenden Rohrleitungsabschnitt (12, 14) passgenau umgibt.

13. Hydraulische Regelgruppe nach Anspruch 11 oder 12, **dadurch gekennzeichnet, dass** jedes der Bauteile der hydraulischen Regelgruppe (10) und der wenigstens eine fluidführende Rohrleitungsabschnitt (12, 14) mit einem Dämmungsmodul (40, 42, 44, 46) umgeben ist, wobei die Dämmungsmodule (40, 42, 44, 46) jeweils diffusionsdicht miteinander verbunden sind.

14. Hydraulische Regelgruppe nach einem der Ansprüche 11 bis 13, **dadurch gekennzeichnet, dass** die zweite Dämmvorrichtung (34) ein Gehäuse bildet, in der die mit der ersten Dämmvorrichtung (32) versehene hydraulische Regelgruppe (32) angeordnet ist.
